# EUROPEAN PATENT APPLICATION

(11) **EP 3 226 536 A1**
(43) Date of publication of application: **04.10.2017**
(21) Application number: 15864273.6
(22) Date of filing: 27.11.2015
(51) Int. Cl.: H04N 5/225, G02B 7/02, G03B 17/02

(54) **PHOTOGRAPHING DEVICE**

(30) Priority: 27.11.2014 JP 2014240481
(71) Applicant: Panasonic Intellectual Property Management Co., Ltd., Osaka-shi, Osaka 540-6207 (JP)
(72) Inventor: IDA, Tetsuya, Chuo-ku, Osaka-shi, Osaka 540-6207 (JP)
(74) Representative: Schwabe - Sandmair - Marx
(86) International application number: PCT/JP2015/005932
(87) International publication number: WO 2016/084395

(57) **Abstract**

As electric wires (16) connecting electrode terminals (15₁ to 15₃) of a circuit board (10) and electrode terminals (17₁ to 17₃) of a connector (18) to each other, an elastic conductor is used. Thus, a pressure applied in injection molding of a holding member (19) to each electric wire (16) is absorbed by the elasticity of the electric wire (16), and therefore, each electric wire (16) can be prevented from being broken through strain deformation, and the electrode terminals (15₁ to 15₃) of the circuit board (10) and the electrode terminals (17₁ to 17₃) of the connector (18) are prevented from being damaged.

## Description

### Technical Field

The present invention relates to a photographing device using a solid-state image sensing device such as a CCD (Charge Coupled Device) image sensor or a CMOS (Complementary Metal Oxide Semiconductor) image sensor.

### Background Art

Recently, in accordance with increased performance of a photographing device using a solid-state image sensing device as one described above, electronic equipment equipped with a photographing device including an autofocus mechanism has become widely used.

Patent Literature 1 discloses a photographing device capable of adjusting its position in an optical axis direction by causing a leg section of a lens to abut against a region excluding a light receiving surface of a solid-state image sensing device.

It is necessary to assemble the lens of the photographing device disclosed by Patent Literature 1 in a clean room so as to prevent dust and the like from adhering to the light receiving surface of the solid-state image sensing device, and therefore, this device has a problem in which the production cost is high.

For solving this problem, there is an attempt to produce a sensor unit (it should be noted that a sensor using a solid-state image sensing device is designated as a sensor unit) by mounting a solid-state image sensing device on a circuit board, and with the solid-state image sensing device covered with a cover glass having a reference plane, causing a melted resin to flow around the cover glass, and then curing the resin. According to this attempt, since general semiconductors are produced in a clean room, dust and the like can be preventing from adhering to the light receiving surface of the solid-state image sensing devise thus produced. Besides, since the sensor unit is obtained with the cover glass attached thereto, adhesion of dust can be avoided also during transport and assembly.

This attempt also has, however, a problem in which the number of components is increased and the number of production steps is increased. Besides, since a cured resin generally has poor accuracy (because the resultant surface is not flat but irregular in many cases), positioning is difficult in assembling a lens. Furthermore, if a lens is produced by glass molding in consideration of heat resistance, it is difficult, due to restriction in molding accuracy, to accurately form a flange surface against the focal position of the lens.

### Citation List

### Patent Literature

Patent Literature 1: JP-A-2003-046825

### Summary of Invention

### Technical Problem

As is well known, injection molding is a method in which a resin molding is obtained by injecting a material having been melted by heating into a mold and cooling/solidifying the resultant.

In the injection molding, a molding is generally formed into a desired shape by compression with a pressure applied by using a hydraulic cylinder or the like incorporated into a mold, and hence, it is apprehended that a circuit board or an electric wire may be strained and deformed. In other words, if a circuit board mounting a solid-state image sensing device, a lens barrel holding a lens therein, a connector for externally outputting an electric signal output from the solid-state image sensing device, and an electric wire connecting the circuit board and the connector to each other are to be sealed with a resin by the injection molding, it is apprehended that the circuit board and the electric wire may be strained and deformed by a pressure applied in the sealing.

The present invention is devised in consideration of these circumstances, and an object is to provide a photographing device in which, when a circuit board mounting a solid-state image sensing device, a lens barrel holding a lens therein, a connector, and an electric wire connecting the circuit board and the connector to each other are sealed with a resin by the injection molding, the electric wire connecting the circuit board and the connector to each other is prevented from being broken through strain deformation, and terminal portions of the circuit board and the connector connected to the electric wire are prevented from being damaged.

### Solution to Problem

The photographing device of the present invention includes: a circuit board; a connector; a solid-state image sensing device disposed on an upper surface of the circuit board; a lens disposed above spaced from the solid-state image sensing device; a lens barrel disposed on the upper surface of the circuit board and that holds the lens therein; an electric wire for transmitting, from the circuit board to the connector, an electric signal output from the solid-state image sensing device; and a holding member injection molded to enclose a region including and surrounding the lens barrel, a region including and surrounding the circuit board, and a region including and surrounding the electric wire and the connector, and the electric wire is an elastic conductor.

When this structure is employed, a pressure applied, in producing the holding member by injection molding, to the electric wire connecting the circuit board and the connector to each other is absorbed by the elasticity of the electric wire, and therefore, the electric wire can be prevented from being broken through strain deformation, and terminal portions of the circuit board and the connector connected to the electric wire (namely, electrode terminals) are prevented from being damaged.

In the above-described structure, the circuit board has a first electrode terminal on a side surface thereof, and a first end of the electric wire is connected to the first electrode terminal.

When this structure is employed, since the electric wire is elastic, the pressure applied in resin molding of the holding member is absorbed by the electric wire, and hence, the electric wire is prevented from being broken through the strain deformation, and the first electrode terminal of the circuit board is prevented from being damaged.

In the above-described structure, the connector has a second electrode terminal on a side surface thereof, and a second end of the electric wire is connected to the second electrode terminal.

When this structure is employed, since the electric wire is elastic, the pressure applied in the resin molding of the holding member is absorbed by the electric wire, and hence, the electric wire is prevented from being broken through the strain deformation, and the second electrode terminal of the connector is prevented from being damaged.

In the above-described structure, the electric wire is in a non-linear shape.

When this structure is employed, the pressure applied in the resin molding of the holding member is absorbed by the electric wire, and hence, the electric wire is prevented from being broken through the strain deformation, and the terminal portions of the circuit board and the connector connected to the electric wire are prevented from being damaged.

In the above-described structure, the non-linear shape is a bent shape.

When this structure is employed, the pressure applied in the resin molding of the holding member is absorbed by the electric wire, and hence, the electric wire is prevented from being broken through the strain deformation, and the terminal portions of the circuit board and the connector connected to the electric wire are prevented from being damaged.

In the above-described structure, the non-linear shape is a curved shape.

When this structure is employed, the pressure applied in the resin molding of the holding member is absorbed by the electric wire, and hence, the electric wire is prevented from being broken through the strain deformation, and the terminal portions of the circuit board and the connector connected to the electric wire are prevented from being damaged.

In the above-described structure, the electric wire is in a linear shape.

When this structure is employed, the pressure applied in the resin molding of the holding member is absorbed by the electric wire, and hence, the electric wire is prevented from being broken through the strain deformation, and the terminal portions of the circuit board and the connector connected to the electric wire are prevented from being damaged.

In the above-described structure, the electric wire has a non-uniform line width.

When this structure is employed, the pressure applied in the resin molding of the holding member is absorbed by the electric wire, and hence, the electric wire is prevented from being broken through the strain deformation, and the terminal portions of the circuit board and the connector connected to the electric wire are prevented from being damaged.

### Advantageous Effects of Invention

According to the present invention, in injection molding of a holding member enclosing a region including and surrounding a lens barrel, a region including and surrounding a circuit board, and a region including and surrounding an electric wire and a connector, the electric wire connecting the circuit board and the connector to each other is not broken through strain deformation, and terminal portions of the circuit board and the connector connected to the electric wire are not damaged.

### Brief Description of Drawings

[Fig. 1] Fig. 1 is a vertical cross-sectional view illustrating the structure of a photographing device according to one embodiment of the present invention.
[Fig. 2] Fig. 2 is a diagram illustrating an example in which three electric wires of the photographing device of Fig. 1 are in a non-linear curved shape.
[Fig. 3] Fig. 3 is a diagram illustrating an example in which the three electric wires of the photographing device of Fig. 1 are in a linear shape.
[Fig. 4] Figs. 4(a) and 4(b) are diagrams illustrating examples in which the three electric wires of the photographing device of Fig. 1 have a non-uniform line width.

### Description of Embodiment

A preferred embodiment for practicing the present invention will now be described in detail with reference to the accompanying drawings.

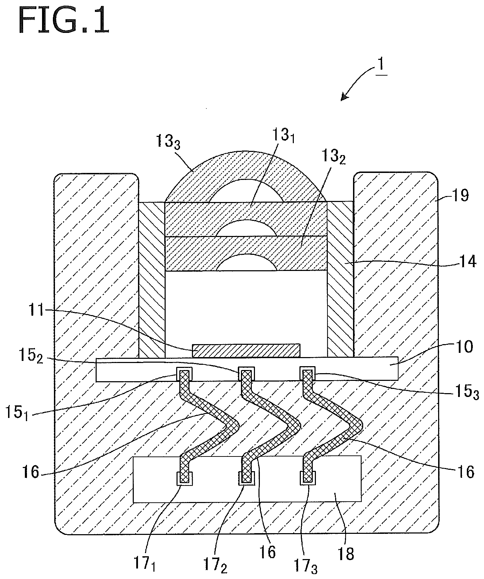

Fig. 1 is a vertical cross-sectional view illustrating the structure of a photographing device according to one embodiment of the present invention. It is noted, in this drawing, that a circuit board 10 and a connector 18 described later are not illustrated as a cross-section but as a side view, and that each electric wire 16 electrically connecting the circuit board 10 and the connector 18 to each other is also not illustrated as a cross-section but as an external appearance.

In Fig. 1, the photographing device 1 of the present embodiment includes the circuit board 10; a solid-state image sensing device 11 disposed in a center portion on the upper surface of the circuit board 10; three lenses 13₁ to 13₃ disposed to be spaced above the solid-state image sensing device 11; a lens barrel 14 disposed on the upper surface of the circuit board 10 and holding the lenses 13₁ to 13₃ therein; the three electric wires 16 having first ends respectively connected to three electrode terminals (first electrode terminals) 15₁ to 15₃ provided on one of four side surfaces of the circuit board 10; the connector 18 having, on one side surface, three electrode terminals (second electrode terminals) 17₁ to 17₃ respectively connected to second ends of the three electric wires 16 for taking out an electric signal output from the solid-state image sensing device 11 via the circuit board 10; and a holding member 19 injection molded and enclosing a region including and surrounding the lens barrel 14, a region including and surrounding the circuit board 10, and a region including and surrounding the electric wires 16 and the connector 18.

Each of the three electric wires 16 is an elastic conductor. The electric wires 16 respectively connect, as described above, the electrode terminals 15₁ to 15₃ provided on the one side surface of the circuit board 10 to the electrode terminals 17₁ to 17₃ provided on the one side surface of the connector 18. Each electric wire 16 is formed in a non-linear bent shape (in a substantially dogleg shape). Since the respective electric wires 16 are elastic, they absorb a pressure caused in the resin molding of the holding member 19. Thus, in the injection molding of the holding member 19 enclosing the region including and surrounding the lens barrel 14, the region including and surrounding the circuit board 10 and the region including and surrounding the electric wires 16 and the connector 18, the respective electric wires 16 are prevented from being broken through strain deformation, and the electrode terminals 15₁ to 15₃ of the circuit board 10 and the electrode terminals 17₁ to 17₃ of the connector 18 are prevented from being damaged.

In this manner, according to the photographing device 1 of the present embodiment, an elastic conductor is used as each of the electric wires 16 respectively connecting the electrode terminals 15₁ to 15₃ of the circuit board 10 to the electrode terminals 17₁ to 17₃ of the connector 18, so as to absorb, owing to their elasticity, the pressure applied to the electric wires 16 in the injection molding of the holding member 19, and therefore, the respective electric wires 16 are prevented from being broken through the strain deformation, and the electrode terminals 15₁ to 15₃ of the circuit board 10 and the electrode terminals 17₁ to 17₃ of the connector 18 connected to the electric wires 16 are prevented from being damaged.

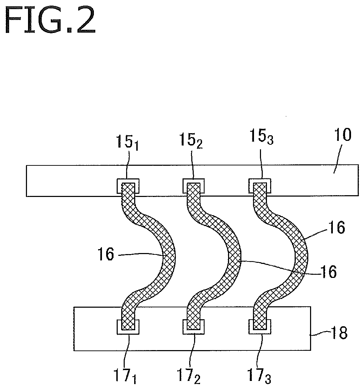

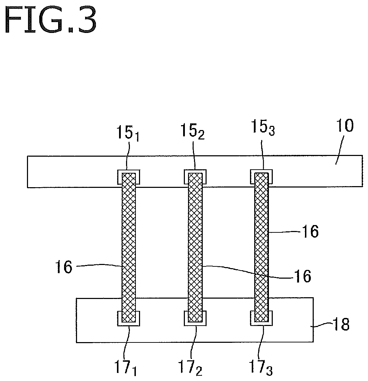

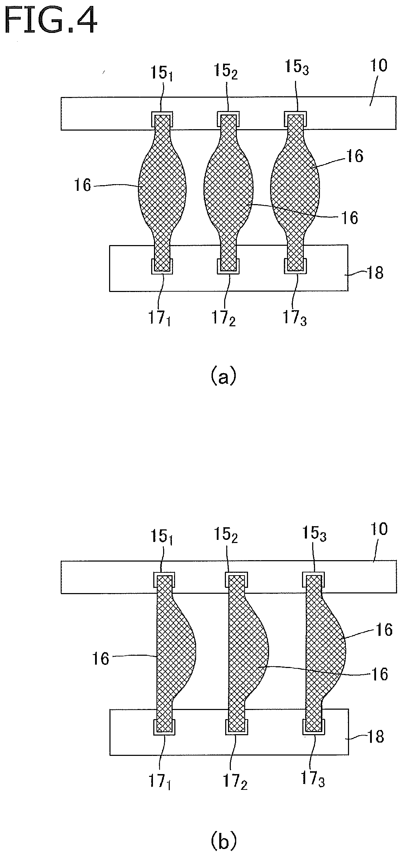

Incidentally, although each of the electric wires 16 is in the non-linear bent shape of the substantially dogleg shape in the photographing device 1 of the present embodiment, the shape is not limited to this, but for example, may be a non-linear curved shape, or a simple linear shape. Alternatively, each electric wire 16 may have a non-uniform line width. Fig. 2 is a diagram illustrating an example in which the electric wires 16 are in a non-linear curved shape. Besides, Fig. 3 is a diagram illustrating an example in which the electric wires 16 are in a linear shape. Furthermore, Figs. 4(a) and 4(b) are diagrams illustrating examples in which the electric wires 16 have a non-uniform line width. In this case, each electric wire is in a shape that is largest on both the lateral sides in a center portion and is gradually narrowed toward both ends in Fig. 4(a). The shape illustrated in Fig. 4(b) is obtained by vertically dividing the shape of Fig. 4(a) into two. In other words, the shape has a linear left side (i.e., side on the left hand side in Fig. 4(b)), and has a right side largest in the center portion and gradually narrowed toward both ends.

Besides, in the photographing device 1 of the present embodiment, the circuit board 10 has the three electrode terminals 15₁ to 15₃, and the connector 18 has the three electrode terminals 17₁ to 17₃, so as to connect the electrode terminals 15₁ to 15₃ respectively to the electrode terminals 17₁ to 17₃ by the three electric wires 16, but it goes without saying that the numbers of the electrode terminals 15₁ to 15₃ and the electrode terminals 17₁ to 17₃ of the circuit board 10 and the connector 18 and the number of the electric wires 16 are herein merely exemplarily described.

The present invention has been described in detail with reference to the specific embodiment, and it would be apparent for those skilled in the art that various changes and modifications can be made without departing from the spirit and the scope of the present invention.

This application is based upon the Japanese patent application (Japanese Patent Application No. 2014-240481) filed on November 27, 2014, the entire contents of which are incorporated herein by reference.

### Industrial Applicability

The present invention has effects that, in performing injection molding of a holding member enclosing a region including and surrounding a lens barre, a region including and surrounding a circuit board and a region including and surrounding an electric wire and a connector, the electric wire connecting the circuit board and the connector to each other is prevented from being broken through strain deformation, and terminal portions of the circuit board and the connector connected to the electric wire are prevented from being damaged, and is applicable to a photographing device using a solid-state image sensing device such as a CCD image sensor or a CMOS image sensor.

### Reference Signs List

- 1: photographing device
- 10: circuit board
- 11: solid-state image sensing device
- 13₁ to 13₃: lens
- 14: lens barrel
- 15₁ to 15₃, 17₁ to 17₃: electrode terminal
- 16: electric wire
- 18: connector
- 19: holding member

## Claims

1. A photographing device, comprising:
a circuit board;
a connector;
a solid-state image sensing device disposed on an upper surface of the circuit board;
a lens disposed above and spaced from the solid-state image sensing device;
a lens barrel disposed on the upper surface of the circuit board and that holds the lens therein;
an electric wire for transmitting, from the circuit board to the connector, an electric signal output from the solid-state image sensing device; and
a holding member injection molded to enclose a region including and surrounding the lens barrel, a region including and surrounding the circuit board, and a region including and surrounding the electric wire and the connector,
wherein the electric wire is an elastic conductor.

2. The photographing device according to claim 1, wherein the circuit board has a first electrode terminal on a side surface thereof; and
wherein a first end of the electric wire is connected to the first electrode terminal.

3. The photographing device according to claim 1 or 2, wherein the connector has a second electrode terminal on a side surface thereof; and
wherein a second end of the electric wire is connected to the second electrode terminal.

4. The photographing device according to any one of claims 1 to 3, wherein the electric wire is in a non-linear shape.

5. The photographing device according to claim 4, wherein the non-linear shape is a bent shape.

6. The photographing device according to claim 4, wherein the non-linear shape is a curved shape.

7. The photographing device according to any one of claims 1 to 3, wherein the electric wire is in a linear shape.

8. The photographing device according to any one of claims 1 to 7, wherein the electric wire has a non-uniform line width.
